# EUROPÄISCHE PATENTSCHRIFT

(11) **EP 0 855 258 B1**
(45) Veröffentlichungstag und Bekanntmachung des Hinweises auf die Patenterteilung: **02.01.2003**
(21) Anmeldenummer: 98101444.2
(22) Anmeldetag: 26.01.1998
(51) Int. Cl.: B29C 33/34, B29C 41/06, B29C 41/46

(54) **Rotationsformanlage**
Rotational moulding plant
Installation de roto-moulage

(30) Priorität: 24.01.1997 DE 19702469
(43) Veröffentlichungstag der Anmeldung: 29.07.1998
(73) Patentinhaber: Ernst Reinhardt GmbH, 78048 Villingen-Schwenningen (DE)
(72) Erfinder: Reinhardt, Eugen, 78048 Villingen-Schwenningen (DE)
(74) Vertreter: Patentanwälte Westphal, Mussgnug & Partner

(56) Entgegenhaltungen:
- WO-A-96/38281
- DE-A- 2 059 107
- US-A- 3 907 482
- US-A- 4 102 624
- US-A- 4 632 654

## Beschreibung

Die vorliegende Erfindung betrifft eine Rotationsformanlage mit einem Sinterofen, wenigstens einer Kühlkammer und wenigstens einem Transportmittel zur Aufnahme wenigstens eines Formkörpers und zum Transport des Formträger zwischen dem Sinterofen und der wenigstens einen Kühlkammer.

Derartige Anlagen dienen zur Herstellung von Kunststoffhohlkörpern in Hohlformen, die durch den Formträger gehalten werden. Während des Herstellungsprozesses werden die Hohlformen mit Kunststoffpulver oder Sinterpulver gefüllt und im Sinterofen unter Durchführung einer Rotationsbewegung erwärmt. Nach Aufschmelzen und gleichmäßiger Verteilung des Pulvers in der Hohlform wird der Formträger durch das Transportmittel zu der Kühlkammer verbracht, wo unter Fortführung einer Rotationsbewegung die Hohlform abgekühlt wird.

Eine gattungsgemäße Rotationsformanlage ist aus der GB-A-1 334 331 bekannt. Die beschriebene Anlage weist kreisförmig um ein rotierendes Transportmittel angeordnete Kühlkammern und einen Sinterofen auf. Das nach Art eines Karussells arbeitende Transportmittel weist vier Arme zur Aufnahme von Formträgern auf, die durch eine Rotationsbewegung des Transportmittels zwischen den einzelnen Stationen des Herstellungsprozesses bewegt werden. Der Sinterofen ist in radialer Richtung verfahrbar, um einen der an den Armen befestigten Formträger zu umschließen. Während des Schmelzprozesses umgibt der Sinterofen den Formträger lediglich von fünf Seiten; eine Klappe des Sinterofens muß während des Schmelzprozesses bedingt durch den starren Arm des Transportmittels offen bleiben, woraus hohe Energieverluste während des Schmelzprozesses resultieren.

Aus der EP 01 77 906 A2 ist eine Rotationsformanlage bekannt, bei welcher eine Anzahl Kühlkammern kreisförmig um einen Sinterofen angeordnet ist und bei der als Transportmittel ein auf Schienen zwischen den Kühlkammern und dem Sinterofen verfahrbarer Werkzeugträger dient. Die Anlage besitzt den Nachteil, daß sie aufgrund der kreisförmigen Anordnung der Kühlkammern um den Sinterofen sehr platzaufwendig ist und daß die Heizkammer entweder so groß dimensioniert sein muß, daß der Formträger samt Transportmittel aufgenommen werden kann oder daß auch hier der Sinterofen bei teilweise außerhalb verbleibendem Transportmittel nicht vollständig geschlossen werden kann.

Eine weitere gattungsgemäße Vorrichtung ist aus: Wildfeuer, E.: "Rotationsformen - Verfahrenstechnische Übersicht", Plaste und Kautschuk, 21. Jg., Heft 3, 1974, S. 203 bis 207, bekannt. Dort ist insbesondere eine Rotationsanlage mit in Reihe zu einer Heizkammer angeordneten Kühlkammern beschrieben, wobei als Transportmittel Werkzeugträger dienen, die auf einer Schiene neben den Kühlkammern und der Heizkammer verfahrbar sind und welche teleskopartige Arme zum Einbringen eines Rotationsformwerkzeuges in die Kühlkammern bzw. die Heizkammer aufweisen. Auch hier ist ein vollständiges Schließen der Heizkammer bedingt durch den Teleskoparm der Transportmittel nicht möglich. Ferner sind stets so viele Transportmittel erforderlich, wie sich gerade Formträger im Fertigungsprozess befinden.

Weitere gattungsgemäße Vorrichtungen sind in der US 4,102,624, der US 4,632,654 und der US 3,907,482 bekannt.

Ziel der vorliegenden Erfindung ist es daher, eine Rotationsformanlage zur Verfügung zu stellen, die platzsparend zu realisieren ist und die unter optimaler Ausnutzung der zugeführten Energie arbeitet. Ferner sollen die für die bekannten Rotationsformanlagen beschriebenen Nachteile vermieden werden.

Dieses Ziel wird durch eine eingangs beschriebene Rotationsformanlage gelöst, bei der der Sinterofen und die wenigstens eine Kühlkammer erste Drehvorrichtungen zur Aufnahme des Formträgers aufweisen.

Der Formträger kann so vollständig in den Sinterofen bzw. die Kühlkammern eingebracht und der Sinterofen bzw. die Kühlkammern können während des Schmelz- bzw. Kühlvorgangs vollständig geschlossen werden. Letzterer Aspekt bewirkt eine optimale Ausnutzung der zur Erhitzung bzw. Kühlung aufgewandten Energie. Ferner kann das Transportmittel, welches zum Transport des Formträgers zwischen den Kühlkammern und dem Sinterofen dient, zur Beförderung weiterer Formtäger verwendet werden, während sich ein Formträger gerade im Sinterofen oder in der Kühlkammer befindet. Dies trägt zur Reduzierung der Gesamtkosten der Rotationsformanlage bei.

Vorteilhafte Ausgestaltungen der Erfindung sind Gegenstand der Unteransprüche.

Vorteilhafterweise sind der Sinterofen und zwei Kühlkammern sowie eine Entformstation hintereinander in Reihe angeordnet. Hierdurch ergibt sich eine besonders platzsparende Realisierung der erfindungsgemäßen Rotationsformanlage.

Der Platzbedarf kann gemäß einer weiteren Ausführungsform weiter dadurch reduziert werden, daß das Transportmittel als Formträgerwagen ausgebildet ist, der unterhalb des Sinterofens und der wenigstens einen Kühlkammer verfahrbar ist. Hieraus resultiert eine Rotationsformanlage mit minimaler Standfläche, die den in modernen Fabrikationsstätten nach oben zur Verfügung stehenden Raum nutzt. Der Formträgerwagen weist eine Hubeinrichtung auf, um die Formträger von unten in den Sinterofen bzw. die Kühlkammern einzubringen. Da der Sinterofen zum Einbringen des Formträgers von unten zu öffnen ist, entweicht weniger Wärme, als dies bei Öffnung an einer der anderen Seiten der Fall wäre. Dies erweist sich als ein weiterer Vorteil dieser Ausführungsform. Die beschriebene Anlage bietet die Möglichkeit, in derselben Anlage Formen mit unterschiedlicher Prozeßdauer zu behandeln, da im Prozeßablauf ein Formträger den anderen überholen kann. Hierdurch ist eine optimale Auslastung der Anlage gewährleistet.

Eine weitere Ausführungsform sieht vor, daß der Sinterofen mittels einer zweiten Drehvorrichtung drehbar gelagert ist, wobei eine durch die zweite Drehvorrichtung vorgegebene zweite Drehachse und eine durch die den Formträger aufnehmende erste Drehvorrichtung vorgegebene erste Drehachse nicht parallel verlaufen. Der Formträger vollzieht so durch seine Eigenrotation und die Rotation des Sinterofens im Sinterofen eine Rotationsbewegung, die eine optimale Verteilung des aufgeschmolzenen Pulvers im Inneren der durch den Formträger gehaltenen Hohlformen bewirkt.

Zur Aufnahme des Formträgers weisen die ersten Drehvorrichtungen des Sinterofens bzw. der Kühlkammern Spannelemente auf, die an gegenüberliegenden Seiten des Fromträgers angreifen und die in Verlängerung der ersten Drehachsen, insbesondere pneumatisch, verschiebbar sind, um den Fromträger einzuspannen bzw. freizugeben. Wenigstens eines der beiden Spannelemente wird elektromotorisch zur Rotation des Formträgers angetrieben. Zur Herstellung einer drehmomentsahlüssigen Verbindung zwischen diesem Spannelement und dem Formträger weist das Spannelement stirnseitig Ansätze und/oder Rücksprünge auf, die an entsprechenden Rücksprüngen und/oder Ansätzen des Formträgers zur Drehmomenübertragung angreifen.

Weiterhin weist auch der Formträgerwagen eine Drehvorrichtung auf, um den Formträger während des Transportes von dem Sinterofen zu den Kühlkammern in Rotation zu halten.

Die Erfindung wird nachfolgend anhand von Ausführungsbeispielen mittels Figuren näher erläutert. Es zeigen:
- Figur 1:: Erfindungsgemäße Rotationsformanlage in Seitenansicht;
- Figur 2:: Rotationsformanlage gemäß Figur 1 in Draufsicht;
- Figuren 3, 4, 5:: Sinterofen der erfindungsgemäßen Rotationsformanlage in Seitenansicht und Draufsicht (Figur 4);
- Figur 6:: Formträgerwagen mit Formträger in Seitenansicht.

In den Figuren bezeichnen, sofern nicht anders angegeben, gleiche Bezugszeichen gleiche Teile mit gleicher Bedeutung.

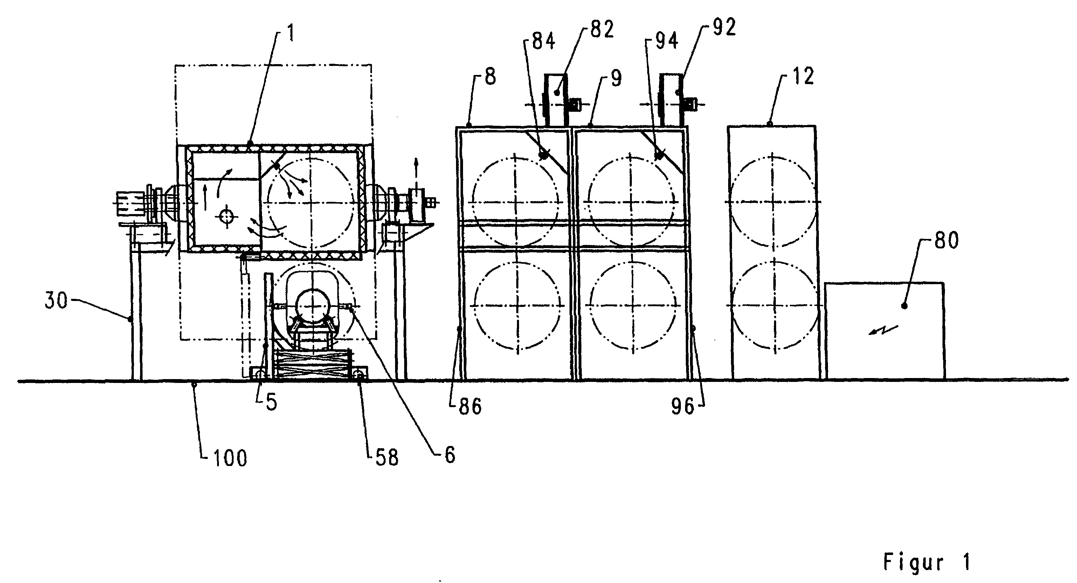

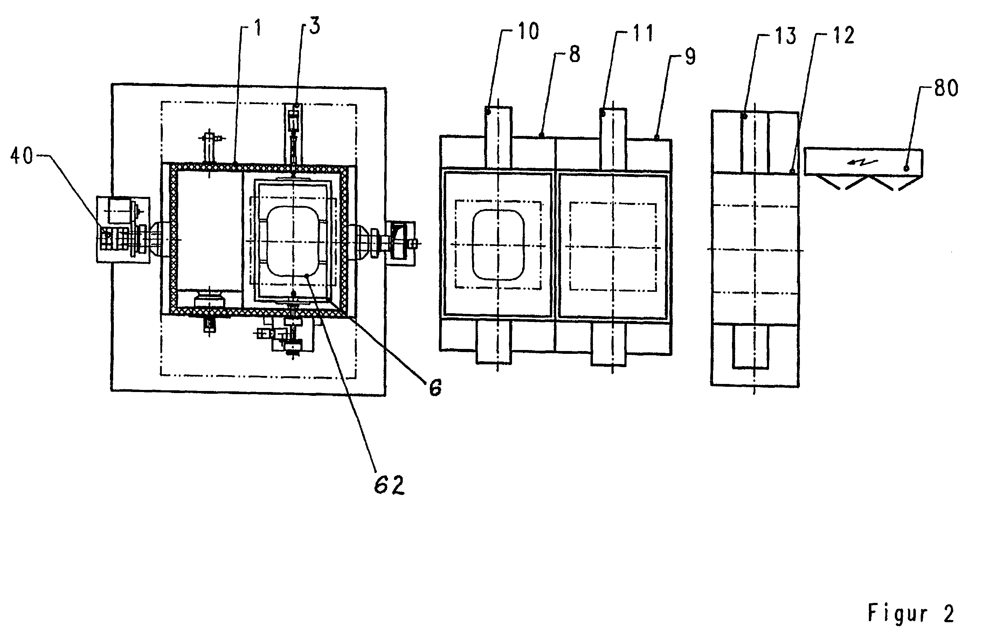

In den Figuren 1 und 2 ist eine erfindungsgemäße Rotationsformanlage in Seitenansicht (Figur 1) und Draufsicht (Figur 2) dargestellt. Die Rotationsformanlage weist einen Sinterofen 1 und zwei in Reihe zu diesem angeordnete Kühlkammern 8, 9 auf. In Reihe dazu ist eine Entformstation 12 angeordnet, die zur Bereitstellung neuer Formträger und zur Entformung der Formträger bzw. der Hohlformen nach Abschluß des Kühlprozesses dient. Der Vollständigkeit halber ist ein Schaltschrank 80 dargestellt, der die zur Steuerung der Anlage erforderliche Elektronik aufnimmt.

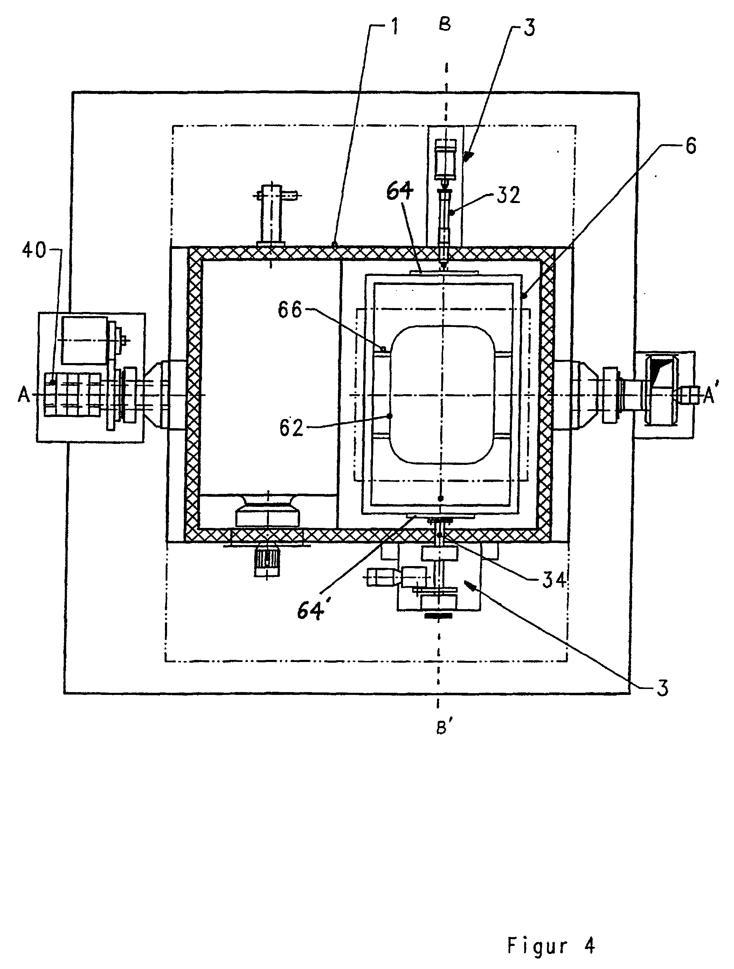

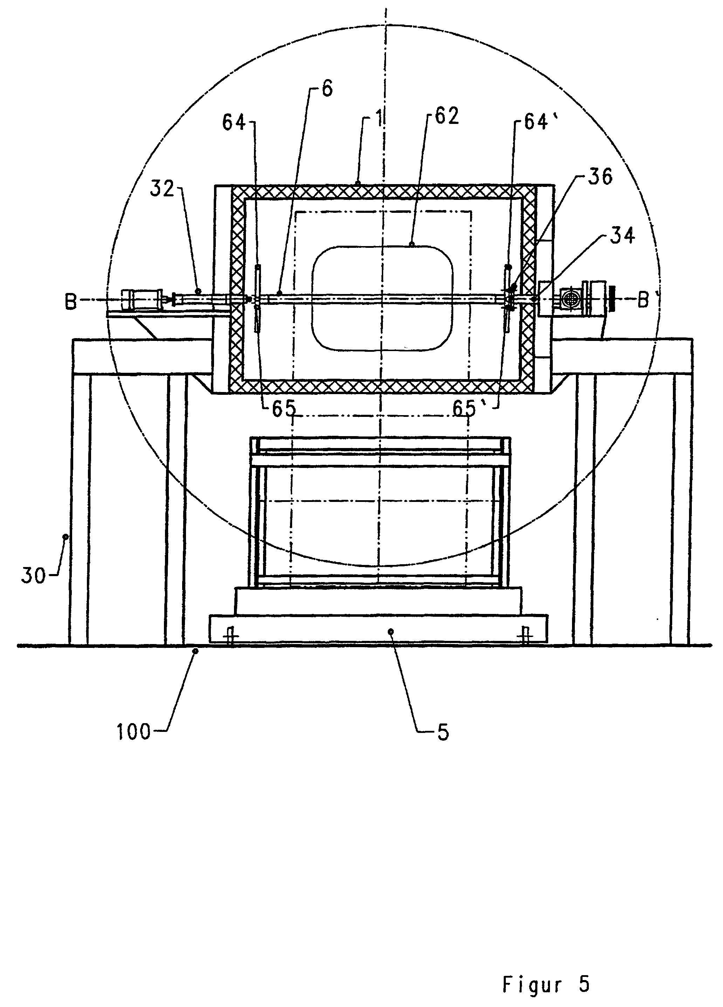

Der Sinterofen 1, die Kühlkammern 8, 9 und die Entformstation 12 besitzen erste Drehvorrichtungen 3, 10, 11, 13 zur drehbaren Aufnahme eines Formträgers 6, der die zur Herstellung von Kunststoffgegenständen erforderlichen Hohlformen trägt. Der Aufbau und die Funktionsweise der identischen ersten Drehvorrichtungen 3, 10, 11, 13 erfolgt im Detail anhand der ersten Drehvorrichtung des Sinterofens 1 in den Figuren 4 und 5.

Der Sinterofen 1 und die Kühlkammern 8, 9 sind auf Stützen 30, 86, 96 gelagert, wodurch ein Formträgerwagen 5, der zum Transport des Formträgers 6 zwischen der Entformstation 12, dem Sinterofen 1 und den Kühlkammern 8, 9 dient, auf einer Schiene 100 unterhalb des Sinterofens und der Kühlkammern 8, 9 verfahrbar ist. Der Formträgerwagen 5 weist an die Schiene 100 angreifende Räder 58 und eine in Figur 1 und 2 nicht näher dargestellte Hubvorrichtung auf, mittels welcher der Formträger 6 von unten in den Sinterofen 1 bzw. die Kühlkammern 8, 9 eingebracht und nach Beendigung des Sinter- bzw. Kühlvorganges wieder entnehmbar ist. Die strichpunktierten Kreise in Figur 1 bzw. die strichpunktierten Rechtecke in Figur 2 deuten die Position eines maximale Abmessungen aufweisenden Formträgers unterhalb bzw. innerhalb des Sinterofens 1 und der Kühlkammern 8, 9 sowie in der Entformstation 12 an.

Auf den Kühlkammern 8, 9 sind Gebläse 82, 92 angeordnet, die Luft ansaugen, welche über Luftauslaßdüsen 84, 94 ins Innere der Kühlkammern 8, 9 zur Kühlung eines Formträgers eingeblasen wird.

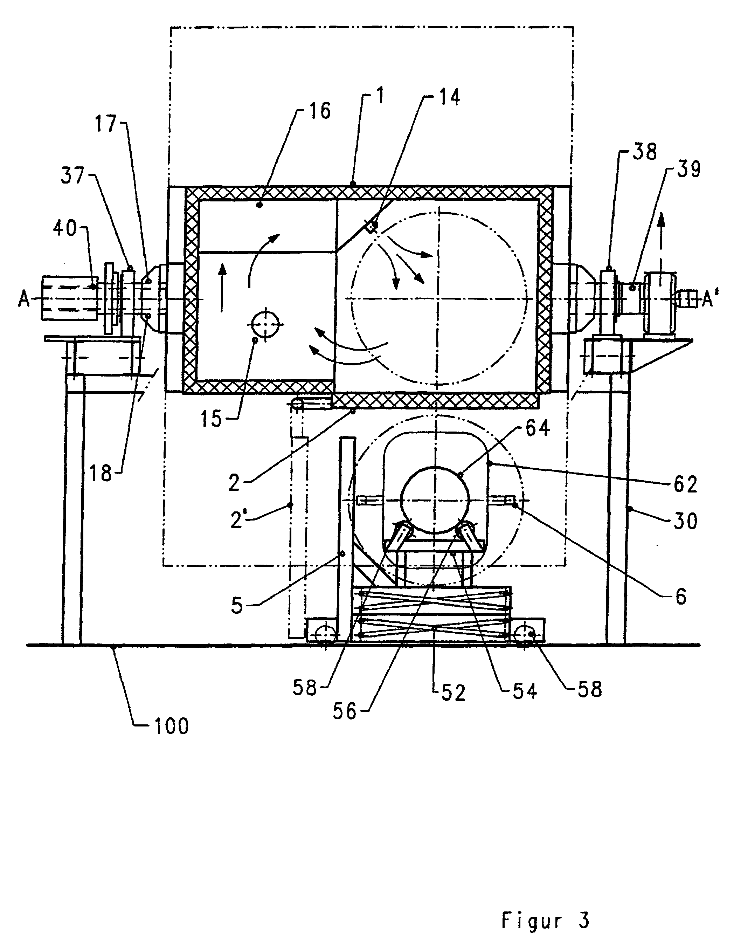

Die Figuren 3 bis 5 zeigen eine detailliertere Darstellung des Sinterofens 1 und der diesen tragenden Vorrichtung in zwei Seitenansichten und in Draufsicht, wobei sich in Figur 3 ein Formträger 6 auf dem Formträgerwagen 5 außerhalb des Sinterofens 1 und in den Figuren 4 und 5 innerhalb des Sinterofens 1 befindet.

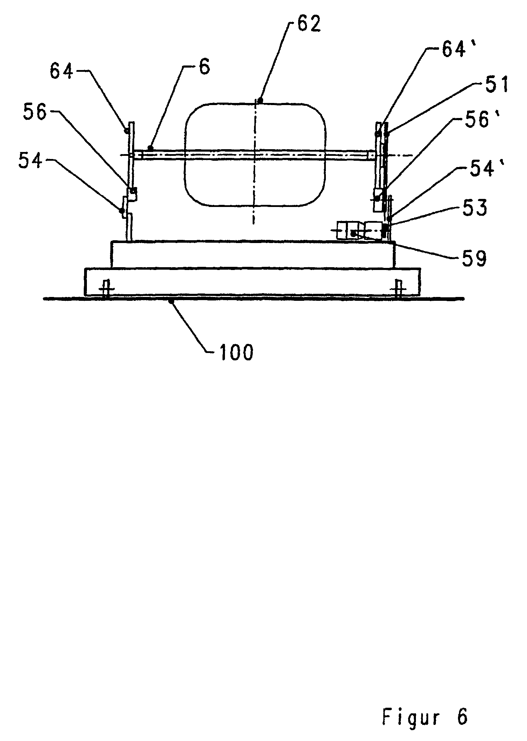

Der Formträger 6 besteht in den dargestellten Beispielen aus einem rechteckförmigen Rahmen in dem mittels Verstrebungen 66 eine Hohlform 62 gehalten ist. An zwei sich gegenüberliegenden Seiten ist je eine kreisförmige Scheibe 64, 64' angebracht, die zur drehbaren Lagerung des Formträgers 6 auf vier Rollen 56, 56', 58 des Formträgerwagens 5 dient. Figur 6 zeigt eine seitliche Darstellung des auf den Formträgerwagen 5 aufgesetzten Formträgers 6. Der Formträgerwagen 5 besitzt eine Drehvorrichtung zur Durchführung einer Rotationsbewegung des Formträgers 6 auf den Rollen 56, 56', 58. Die Drehvorrichtung des Formträgerwagens 5 weist einen Antriebsmotor 59 auf, der über eine Kette 53 eine der Rollen 56', auf denen der Formträger 6 mittels der Scheiben 64, 64' aufliegt, antreibt. Gleichzeitig steht die Kette 53 in Eingriff mit einem Kettenrad 51, das als Teil des Formträgers 6 benachbart zu der Scheibe 64 angeordnet und mit letzterer fest verbunden ist, um den Formträger 6 in Rotation zu versetzen. Der Formträgerwagen 5 besitzt ferner eine Hubvorrichtung 52, mittels der der Formträger 6 von unten in den Sinterofen 1 eingebracht und herausgenommen werden kann.

Eine Öffnung des Sinterofens 1 zum Hineinbringen oder Herausnehmen des Formträgers 6 ist mittels einer elektromotorisch betätigbaren Klappe 2, 2' verschließbar, die in Figur 3 in geschlossener Position (2) und offener Position (2') dargestellt ist.

Der Sinterofen 1 weist eine Drehvorrichtung 3 zur Aufnahme des Formträgers 6 auf, wobei dieser Drehvorrichtung 3 entsprechende Drehvorrichtungen 10, 11, 13 in den in den Figuren 1 und 2 dargestellten Kühlkammern 8, 9 und der Entformstation 12 vorhanden sind. Die Drehvorrichtung 3 besitzt insbesondere pneumatisch, entlang einer ersten Drehachse B-B' verschiebbare erste und zweite Spannelemente 32, 34 zur Aufnahme des Formträgers 6. Das zweite Spannelement 34 weist stirnseitig ein scheibenartiges Element 36 mit Ansätzen auf, wobei diese Ansätze in entsprechende Aussparungen 65' der Scheibe 64' des Formträgers 6 zur Herstellung eines Drehmomentschlusses eingreifen. Auf die Darstellung des in Figur 6 erläuterten Kettenrades 51 ist aus Gründen der Übersichtlichkeit in den Figuren 4 und 5 verzichtet. Das Kettenrad 51 weist eine Ausnehmung auf, wodurch das scheibenartige Element 36 an der Scheibe 64' angreifen kann. Das zweite Spannelement 34 ist elektromotorisch angetrieben, um den Formträger 6 nach Drehmomentschluß mit dem zweiten Spannelement 34 in eine Rotationsbewegung um die Drehachse B-B' zu versetzen. Das erste Spannelement 32 greift stirnseitig in eine Aussparung 65 der kreisförmigen Scheibe 64 des Formträgers 6 ein, um zusammen mit dem zweiten Spannelement 34 den Formträger 6 zu halten.

Im folgenden soll kurz das Einbringen und Herausnehmen des Formträgers 6 in den und aus dem Sinterofen 1 beschrieben werden.

Der Formträger 6 wird mittels des Formträgerwagens 5 unter den bereits geöffneten Sinterofen 1 gebracht. Mittels der Hubvorrichtung 52 wird der Formträger 6 angehoben, bis er sich auf einer Höhe befindet, auf der die Spannelemente 32, 34 an den entsprechenden Ausnehmungen 65, 65' des Formträgers 6 angreifen können. Die Spannelemente 32, 34 werden nun pneumatisch in axialer Richtung gegen den Formträger 6 gedrückt, wobei das erste Spannelement 32 in die entsprechende Aussparung 65 des Formträgers 6 eingreift. Es folgt eine Rotation des zweiten Spannelements 34 bis die Ansätze der Stirnscheibe 36 in die Aussparungen 65' des Formträgers 6 eingreifen. Der Formträger 6 ist so durch die beiden Spannelemente 32, 34 gehalten, die Hubvorrichtung 52 wird dann abgesenkt und die Klappe 2 geschlossen. Nach Beendigung des Schmelzvorganges wird die Klappe 2 geöffnet, die Hubvorrichtung 52 ausgefahren, bis die beiden Scheiben 64, 64' des Formträgers 6 auf den Rollen 56, 56', 58 der Haltevorrichtung 54 des Formträgerwagens 5 aufliegen. Die Spannelemente 32, 34 werden bei rotierendem Formkörper 6 zurückgezogen, um den Formträger 6 freizugeben. Die Rotationsbewegung des Formträgers 6 wird nun durch die elektromotorische Drehvorrichtung des Formträgerwagens 5 bewirkt, dessen Hubvorrichtung 52 sich zur Herausnahme des Formträgers 6 absenkt und der den Formträger 6 unter Rotation zu einer der Kühlkammern 8, 9 befördert. Das Einbringen und Herausnehmen des Formträgers 6 in die bzw. aus den Kühlkammern 8, 9 erfolgt von unten entsprechend dem Einbringen in den Sinterofen 1, wobei der Formträger 6 während des Kühlprozesses durch die ersten Drehvorrichtungen 10, 11, die in Funktion und Aufbau der ersten Drehvorrichtung 3 des Sinterofens 1 entprechen, in Rotation gehalten wird.

Während der Schmelz- bzw. Kühlvorgänge ist der Formträgerwagen 5 über die gesamte Länge der Rotationsformanlage frei verfahrbar und kann jede der Stationen der Rotationsformanlage anfahren. Während beide Kühlkammern 8, 9 noch bestückt sind, kann so beispielsweise von der Entformstation 12 schon ein neuer Formträger geholt und in den Sinterofen 1 gebracht werden.

Auch in der Entformstation 12 wird der Formträger 6 mittels einer pneumatisch betätigten Spannvorrichtung an die elektromotorisch angetriebene erste Drehvorrichtung 13 gekuppelt und von letzerer in eine für die Entnahme der Endprodukte geeignete Position gedreht. Hierauf werden die Formen erneut mit Material befüllt und mittels des Formträgerwagens 5 zum Sinterofen 1 gefahren.

Die Funktionsweise des Sinterofens 1 wird insbesondere aus Figur 3 ersichtlich. Der Sinterofen 1 ist auf Stützen 30 angeordnet und über eine elektromotorisch angetriebene Welle 39 um eine zweite Drehachse A-A' drehbar gelagert. Die Welle 39 ist mittels Lagern 37, 38 gelagert. Durch die sich überlagernden Drehbewegungen des Sinterofens 1 um die zweite Drehachse A-A' und des Formträgers 6 um die erste Drehachse B-B', die in den dargestellten Beispielen senkrecht zu der zweiten Drehachse A-A' verläuft, ergibt sich für die Hohlform 66 eine Rotationsbewegung, die eine optimale Verteilung des aufgeschmolzenen Pulvers während des Schmelzprozesses innerhalb der Hohlform 66 bewirkt. Im Inneren des Sinterofens 1 befindet sich ein Brenner mit einem Brennerrohr 15 zur Erwärmung des Ofeninneren mittels einer Gasflamme. Ein Luftkanal 16 mit Luftaustrittsdüsen 14 sorgt für die Luftumwälzung innerhalb des Sinterofens. Die Gas- und Luftzuführung erfolgt durch die in Figur 3 gestrichelt dargestellten Zuführleitungen 17, 18 innerhalb der den Sinterofen 1 tragenden Welle 39.

Insgesamt stehen vorzugsweise drei Formträger 6 zur Verfügung. Der Formträgerwagen 5 mit seiner Hubeinrichtung 52 ist so gesteuert, daß ein optimaler Produktionsablauf und ein reibungsloser Transport der Formträger zwischen dem Sinterofen 1, den Kühlkammer 8 bzw. 9 und der Entformstation 12 gewährleistet ist.

### Bezugszeichen

- 1: Sinterofen
- 2: Klappe
- 3: Erste Drehvorrichtung des Sinterofens
- 5: Formträgerwagen
- 6: Formträger
- 8, 9: Kühlkammer
- 10, 11: Erste Drehvorrichtungen der Kühlkammern
- 12: Entformstaion
- 13: Erste Drehvorrichtungen der Entformstation
- 14: Luftauslaßdüse
- 15: Brennerohr
- 16: Luftkanal
- 17, 18: Zuführleitungen
- 30: Stütze
- 32: Erstes Spannelement
- 34: Zweites Spannelement
- 36: Scheibenartiges Element
- 37, 38: Lager
- 39: Welle
- 40: Antrieb
- 51: Kettenrad
- 52: Hubvorrichtung
- 53: Kette
- 54: Haltevorrichtung
- 56, 56', 58: Rollen des Formträgerwagens
- 59: Antriebsmotor
- 62: Hohlform
- 64, 64': Scheiben des Formträgers
- 65, 65': Ausnehmungen des Formträgers
- 66: Verstrebung
- 82, 92: Lüfter
- 84, 94: Luftauslaßdüse
- 86, 96: Stützen
- 100: Schiene

## Patentansprüche

1. Rotationsformanlage mit einem Sinterofen (1), wenigstens einer Kühlkammer (8, 9) und wenigstens einem Transportmittel zur Aufnahme wenigstens eines Formträgers (6) und zum Transport des Formträgers (6) zwischen dem Sinterofen (1) und der wenigstens einen Kühlkammer (8, 9),
**dadurch gekennzeichnet, daß**
der Sinterofen (1) und die wenigstens eine Kühlkammer (8, 9) erste Drehvorrichtungen (3, 32, 34, 36; 10; 11; 13) zur Aufnahme des Formträgers (6) aufweisen.

2. Rotationsformanlage nach Anspruch 1,
**dadurch gekennzeichnet, daß**
sie einen Sinterofen (1) und wenigstens zwei in Reihe zu dem Sinterofen (1) angeordnete Kühlkammern (8, 9) aufweist.

3. Rotationsformanlage nach Anspruch 1 oder 2,
**dadurch gekennzeichnet, daß**
das Transportmittel als Formträgerwagen (5) ausgebildet ist, der unterhalb des Sinterofens (1) und der Kühlkammern (8, 9) verfahrbar ist.

4. Rotationsformanlage nach einem der vorangehenden Ansprüche,
**dadurch gekennzeichnet, daß**
eine Entformstation (12) in Reihe zu dem Sinterofen (1) und der wenigstens einen Kühlkammer (8, 9) angeordnet ist, die eine erste Drehvorrichtung (13) zur Aufnahme des Formträgers (6) aufweist.

5. Rotationsformanlage nach einem der vorangehenden Ansprüche,
**dadurch gekennzeichnet, daß**
der Sinterofen (1) mittels einer zweiten Drehvorrichtung (37, 38, 39) um eine zweite Drehachse (A-A') drehbar gelagert ist, wobei die zweite Drehachse (A-A') und eine durch die erste Drehvorrichtung (3) des Sinterofens (1) bestimmte erste Drehachse (B-B') nicht parallel verlaufen.

6. Rotationsformanlage nach einem der vorangehenden Ansprüche,
**dadurch gekennzeichnet, daß**
die ersten Drehvorrichtungen (3, 10, 11, 13) erste und zweite Spannelemente (32, 34) aufweisen, die in Verlängerung der ersten Drehachsen (B-B') an gegenüberliegenden Seiten des Formträgers (6) angreifen.

7. Rotationsformanlage nach Anspruch 6,
**dadurch gekennzeichnet, daß**
wenigstens eines der Spannelemente (34) stirnseitig nebeneinander angeordnete Ansätze und/oder Rücksprünge aufweist, die an entsprechenden Rücksprüngen und/oder Ansätzen des Formträgers (6) zur Drehmomentübertragung angreifen.

8. Rotationsformanlage nach einem der vorangehenden Ansprüche,
**dadurch gekennzeichnet, daß**
der Formträgerwagen (5) eine Drehvorrichtung (53, 56, 56', 58, 59) zur Rotation des Formkörpers (6) während des Transports aufweist.

9. Rotationsformanlage nach einem der vorangehenden Ansprüche,
**dadurch gekennzeichnet, daß**
der Formträger (6) an gegenüberliegenden Seiten Scheiben (64, 64') aufweist, die zur Auflage auf Rollen (56, 56', 58), die einen Teil der Drehvorrichtung des Formträgerwagens (5) bilden, dienen.

## Revendications

1. Installation de rotomoulage comportant un four de frittage (1), au moins une chambre de refroidissement (8, 9), et au moins un moyen de transport pour recevoir au moins un support de moule (6) et pour transporter le support de moule (6) entre le four de frittage (1) et au moins une chambre de refroidissement (8, 9),
**caractérisée en ce que**
le four de frittage (1) et au moins une chambre de refroidissement (8, 9) comportent un premier dispositif de rotation (3, 32, 34, 36 ; 10, 11, 13) pour recevoir le support de moule (6).

2. Installation de rotomoulage selon la revendication 1,
**caractérisée en ce qu'**
elle comporte un four de frittage (1) et au moins deux chambres de refroidissement (8, 9) en série par rapport au four de frittage (1).

3. Installation de rotomoulage selon l'une quelconque des revendications 1 ou 2,
**caractérisée en ce que**
le moyen de transport est constitué par un chariot de transport de moule (5) mobile sous le four de frittage (1) et sous les chambres de refroidissement (8, 9).

4. Installation de rotomoulage selon l'une quelconque des revendications précédentes,
**caractérisée par**
un poste de démoulage (12) en série sur le four de frittage (1) et qui comporte au moins une chambre de refroidissement (8, 9) ayant un premier dispositif d'entraînement en rotation (13) pour recevoir le support de moule (6).

5. Installation de rotomoulage selon l'une quelconque des revendications précédentes,
**caractérisée en ce que**
le four de frittage (1) est monté à rotation par un second dispositif de rotation (37, 38, 39) autour d'un second axe de rotation (A-A'),
le second axe de rotation (A-A') et un premier axe de rotation (B, B') défini par le premier dispositif de rotation (3) du four de frittage (1) n'étant pas parallèles.

6. Installation de rotomoulage selon l'une quelconque des revendications précédentes,
**caractérisée en ce que**
les premiers dispositifs d'entraînement en rotation (3, 10, 11, 13) comportent des premiers et des seconds éléments de serrage (32, 34) qui agissent dans le prolongement des premiers axes de rotation (B-B') contre des côtés opposés du support de moule (6).

7. Installation de rotomoulage selon la revendication 6,
**caractérisée en ce qu'**
au moins l'un des éléments de serrage (34) présente sur sa face frontale, des prolongements juxtaposés et/ou des parties en retrait coopérant respectivement avec des parties en retrait et/ou des prolongements du support de moule (6) pour transmettre le couple.

8. Installation de rotomoulage selon l'une quelconque des revendications précédentes,
**caractérisée en ce que**
le chariot de transport de moule (5) comporte un dispositif de rotation (53, 56, 56', 58, 59) pour faire tourner le corps de moule (6) pendant le transport.

9. Installation de rotomoulage selon l'une quelconque des revendications précédentes,
**caractérisée en ce que**
le support de moule (6) comporte des disques (64, 64') sur les côtés opposés, servant d'appui aux rouleaux (56, 56', 58) qui constituent une partie du dispositif d'entraînement en rotation du chariot de transport de moule (5).

## Claims

1. Rotational moulding plant having a sintering oven (1), at least one cooling chamber (8, 9) and at least one transport means for accommodating at least one mould carrier (6) and for transporting the mould carrier (6) between the sintering oven (1) and the at least one cooling chamber (8, 9), **characterized in that** the sintering oven (1) and the at least one cooling chamber (8, 9) have first rotary devices (3, 32, 34, 36; 10; 11; 13) for accommodating the mould carrier (6).

2. Rotational moulding plant according to Claim 1, **characterized in that** it has a sintering oven (1) and at least two cooling chambers (8, 9) arranged in series with the sintering oven (1).

3. Rotational moulding plant according to Claim 1 or 2, **characterized in that** the transport means is designed as a mould-carrier truck (5) which can be moved below the sintering oven (1) and the cooling chambers (8, 9).

4. Rotational moulding plant according to one of the preceding claims, **characterized in that** a demoulding station (12) is arranged in series with the sintering oven (1) and with the at least one cooling chamber (8, 9), this demoulding station (12) having a first rotary device (13) for accommodating the mould carrier (6).

5. Rotational moulding plant according to one of the preceding claims, **characterized in that** the sintering oven (1) is mounted in such a way that it can be rotated by means of a second rotary device (37, 38, 39) about a second rotation axis (A-A'), the second rotation axis (A-A') and a first rotation axis (B-B') determined by the first rotary device (3) of the sintering oven (1) not running parallel to one another.

6. Rotational moulding plant according to one of the preceding claims, **characterized in that** the first rotary devices (3, 10, 11, 13) have first and second clamping elements (32, 34) which, in extension of the first rotation axis (B-B'), act on opposite sides of the mould carrier (6).

7. Rotational moulding plant according to Claim 6, **characterized in that** at least one of the clamping elements (34) has extensions and/or recesses which are arranged next to one another at the end face and which act on corresponding recesses and/or extensions of the mould carrier (6) for the torque transmission.

8. Rotational moulding plant according to one of the preceding claims, **characterized in that** the mould-carrier truck (5) has a rotary device (53, 56, 56', 58, 59) for rotating the mould carrier (6) during the transport.

9. Rotational moulding plant according to one of the preceding claims, **characterized in that** the mould carrier (6) has discs (64, 64') on opposite sides, these discs (64, 64') being used for supporting on rollers (56, 56', 58) which form part of the rotary device of the mould-carrier truck (5).
